Europäisches Patentamt

European Patent Office

Office européen des brevets

⑩

(11) Publication number: **0 157 879**
**B1**

# EUROPEAN PATENT SPECIFICATION

(12)

(45) Date of publication of patent specification: **11.04.90**

(21) Application number: **84902612.5**

(22) Date of filing: **02.07.84**

(86) International application number:
**PCT/JP84/00341**

(87) International publication number:
**WO 85/00362 31.01.85 Gazette 85/03**

(51) Int. Cl.⁵: **C 04 B 35/56**

(54) **PROCESS FOR PRODUCING A SILICON CARBIDE SINTERED PRODUCT.**

(30) Priority: **02.07.83 JP 120766/83**

(43) Date of publication of application:
**16.10.85 Bulletin 85/42**

(45) Publication of the grant of the patent:
**11.04.90 Bulletin 90/15**

(84) Designated Contracting States:
**DE FR GB**

(56) References cited:
**GB-A-2 104 103**
**JP-A-5 240 509**
**JP-B- 367 731**

**CHEMICAL ABSTRACTS, vol. 91, no. 2, 9th July
1979, page 228, abstract 8723n, Columbus,
Ohio, US; & JP - A - 79 016 521 (SHIN-ETSU
CHEMICAL CO.) 07-02-1979**

(73) Proprietor: **KUROSAKI REFRACTORIES CO. LTD.
1-1, Higashihama-machi Yahatanishi-ku
Kitakyushu-shi Fukuoka 806 (JP)**

(72) Inventor: **ONDA, Hiroshi
1-19, Nishinarumizu 2-chome Yahatanishi-ku
Kitakyushu-shi Fukuoka 806 (JP)**
Inventor: **HATTA, Tokuaki
40-9, Matsugaokacho, Chiba-shi
Chiba-ken, 280 Japan (JP)**

(74) Representative: **Patentanwälte Müller-Boré,
Deufel, Schön, Hertel, Lewald, Otto
Postfach 26 02 47 Isartorplatz 6
D-8000 München 26 (DE)**

Courier Press, Leamington Spa, England.

## Description

Technical field

This invention relates to a process for producing silicon carbide sintered products, particularly large-shaped composite silicon carbide sintered products by reaction sintering.

Background of the invention

The manufacture of silicon carbide sintered products by the reaction sintering process—which comprises impregnating molten or gaseous silicon into a moulded body consisting of powdery silicon carbide, carbon powder, carbon-forming resin, binder and the like, siliciding carbon to form silicon carbide and bonding silicon carbide used as the starting material thereto—can be carried out in the temperature range from 1410 to 1700 degrees C, which is lower than the sintering temperature of 1900 to 2300 degrees C as applied to the hot-press process and the atmospheric sintering process. Therefore, little dimensional change is observed during the sintering and it is now becoming recognised as a suitable process for the manufacture of large-sized products with a complicated configuration.

However, during the said conventional reaction sintering process, only the outer surface of the powder moulded body is in contact with molten silicon, and silicon is taken into the moulded body by capillary action of the molten silicon. Accordingly, an extremely long period of time has been necessary for siliciding large-sized molded bodies such as elongate and thick-walled products, and it has been considered to be impossible to apply the reaction sintering method to the production of large-sized moulded bodies with industrially economical advantage because of the restriction of the length and thickness.

Furthermore, in the said conventional reaction sintering, when the molten silicon penetrates into the moulded body and contacts the carbon, reaction takes place almost instantaneously to produce silicon carbide, which has a volume about 2.4 times that of the carbon, with the result that the incoming path for the molten silicon is narrowed and hinders further penetration of silicon into the moulded body. Accordingly, there has been a problem because some carbon remains unreacted in the sintered product and causes reduction in the strength of the final products, or cracking results due to the irregularity of the siliciding reaction.

The object of this invention is to overcome the problems in the said conventional reaction sintering method and to provide a process for producing large-sized sintered products by a reaction sintering method which can be carried out in a short time and with an economical advantage, and which causes neither reduction in strength nor cracks in the final product.

Disclosure of the invention

This invention is based on the discovery that, in the process for producing a silicon carbide sintered product by reaction sintering, the siliciding reaction can be carried out in a short time by adding to the starting sintering material an organic silicon polymer whose skeleton is mainly composed of silicon and carbon, and using this for the control of the siliciding reaction rate.

Although the use of an organic silicon polymer in the sintering of silicon carbide has been disclosed already, for example in Japanese Patents (as laid open) Nos. 40509/1977, 154816/1977, 94314/1978, 3815/1979, and 32070/1983, and in Japanese Patent Publication No. 38548/1892, the use of the organic silicon polymer for the control of the siliciding reaction rate in the reaction sintering of silicon carbide, as in this invention, is in itself novel.

In Chemical Abstracts, Volume 91, No. 2, July 1979, page 228, Abstract 8723n refers to Japanese Patent No. 77/81222, which shows the use of an organic silicon polymer in a process for producing a silicon carbide sintered product.

In UK Patent No. 2104103 there is described a method for forming a shaped body of silicon carbide by calcining a shaped body formed from a blend of silicon carbide and carbon powders with an organic binder, impregnating at least the surface layer of the calcined body with an organic solution of a material capable of giving rise to carbon and/or silicon carbide by thermal decomposition, and then immersing the dried body in molten silicon which permeates into it and reacts in situ.

In the present invention, an organic silicon polymer is previously mixed with the starting sintering material comprising silicon carbide powder, carbon powder, resin binder and the like.

According to the present invention there is provided a process for producing a silicon carbide sintered product comprising the steps of:

a) forming a slurry of mixed powder particles of silicon carbide, carbon and resin binder;

b) drying and pulverizing said slurry to obtain secondary particles;

c) admixing less than 50 parts by weight of an organic silicon polymer whose skeleton is composed of silicon and carbon in form of a solution with 100 parts by weight of the secondary particles;

d) drying and pulverizing the thus obtained mixture to obtain a powder;

e) moulding a compact from said powder;

f) immersing said compact in a bath of molten silicon.

The organic silicon polymer referred to herein includes those high molecular weight organic silicon compounds whose skeleton is composed mainly of carbon and silicon, whose side chains are decomposed almost entirely up to about 800 degrees C to form a nearly amorphous continuous structure mainly composed of Si-C bonds and which, at a temperature more than 1000 degrees C, comprise mainly fine beta-SiC that can be observed through X-ray diffraction.

If the molecular weight of the organic silicon polymer is excessively low a great amount of the polymer will evaporate upon decomposition, while on the other hand if it is too large the polymer contains macro-molecules therein which worsen the uniformity of dispersibility. Accordingly, a desired number average molecular weight is from 1000 to 10,000.

If the amount of the organic silicon polymer is added is insufficient, then the controlling effect on the siliciding reaction is insufficient and allows crazing or cracking in the sintered product. On the other hand, if it is in excess, the reaction control effect is too strong and results in a structure in which unreacted portions are left. Thus from the point of view of the effectiveness of the addition, economical factors and productivity, the amount of the organic silicon polymer added is preferably less than 50 parts by weight based on 100 parts by weight of the starting material. The thickness of the polymer coating film can be varied depending upon the surface area of the primary and secondary particles and the amount of the organic silicon polymer to be used in the mixture.

By forming the ultrafine particulate beta-SiC coating film mainly on the surface of the secondary particles in the moulded body, the reaction between carbon and silicon which accompanies the abrupt heat generation and expansion can be controlled.

Accordingly, since the leaching of the carbon is reduced and the reaction proceeds gradually, appropriate gaps or openings can be maintained and the destructive expansion due to silicidation can be avoided.

Further, since beta-SiC formed from the organic silicon polymer by decomposition provides a bonding force between silicon carbide in the aggregate, the moulded body is less liable to destruction, thereby facilitating immersion silicidation of the moulded body.

The powdery product obtained in step d) is mouled into a shaped body by using cold isostatic press moulding, die press moulding, extrusion moulding, injection molding, and like methods.

After degreasing, the moulded body is immersed in molten silicon at a temperature higher than 1410 degrees C and under reduced pressure of less than 1 mm of mercury and silicided. After completion of the silicidation, the sintered product is taken out of the molten silicon and then cooled.

Upon said silicidation, although molten silicon rapidly penetrates into pores of the sintered product, since the silicidation proceeds gradually, the temperature of the silicides is not so high in comparison with the temperatures of the molten silicon. Also, the time required for the silicidation is not substantially affected by the shape and the size, since the entire moulded body is silicided through the immersion, but depends on the wall thickness thereof, porosity of the moulded body upon silicidation, grain size distribution of the aggregate silicon carbide and the amount of carbon mixed.

Accordingly, a uniform sitnered product can be obtained in an extremely short time, even in the case of the large-sized product, by properly setting the above-mentioned conditions. For example, the time required for siliciding a moulded body of 10 mm wall thickness is within one hour, irrespective of the size.

Best mode for carrying out the invention

Specific methods and the effects of this invention will now be described with reference to examples.

Example 1

To 100 parts by weight of commercially available silicon carbide powder: GC#2000, were added 50 parts by weight of carbon black, 15 parts by weight of novolac type phenol resin and one part by weight of hexamethylenetetramine as the hardening promoter. They were mixed in acetone using a ball mill and the obtained slurry was dried and pulverized to obtain secondary particles with less than 44 μ in size.

After admixing 8 parts by weight of polycarbosilane dissolved in xylene with 100 parts by weight of the secondary particles, they were dried under vacuum heating at 70°C to remove xylene, pulverized and then passed thorugh a 74 μ sieve.

The thus obtained powder was subjected to isostatic pressure under a pressure of 1200 kg/cm² to obtain a molded body of 25×100×100 mm in size.

After immersing the molded body in molten silicon at 1470°C and under the reduced pressure of 1 mmHg, it was held at 1550°C for one hour and aged.

The sintered product thus obtained was uniformly silicided and had a bulk density of 3.12 g/cm³ and an average three point bending strength at room temperature of 58 kg/mm².

Comparative Example 1

To 100 parts by weight of commercially available SiC powder: GC#2000, were added 45 parts by weight of carbon black, 15 parts by weight of novolac type phenol resin and one part by weight of hexamethylenetetramine as the hardening promotor. Then, they were mixed in ethanol by using a ball mill, dried and pulverized and, thereafter, molded and sintered in the same manner as in Example 1. A number of cracks and crazing were developed in the sintered product obtained in this way.

Example 2

The sintered product obtained in the same manner as in Example 1 was subjected to isostatic press to

3

obtain a cylindrical molded body of 40 mmφ (inner diameter)×50 mmφ (outer diameter)×1 m (length). The molded body was subjected to silicidation through immersion for 20 min under the same conditions as in Example 1.

The thus obtained sintered product was homogenously silicided and had a bulk density of 3.10 g/cm$^3$ and an average three point-bending strength at room temperature of 56 kg/mm$^2$.

Example 3

To secondary particles obtained in the same manner as in Example 1, 0.5—60 parts by weight of polycarbosilane were admixed, dried and pulverized.

The thus obtained powder was subjected to isostatic press under a pressure of 1200 kg/cm$^2$ to obtain a molded body of 10×20×50 mm in size. The molded body was subjected to reaction sintering under the same conditions as in Example 1. The appearance, the bulk density and the average three point-bending strength of the sintered product are shown in Table 1.

TABLE 1

| No. | Addition amount of organic silicon polymer (parts by weight) | Appearance | Bulk density (g/cm$^3$) | Average three point-bending strength (kg/mm$^2$) |
|---|---|---|---|---|
| 1 | 0 | destructed (crack occurred entirely) | — | — |
| 2 | 0.05 | crazing at the surface | 3.07 | 41 |
| 3 | 0.1 | good | 3.09 | 47 |
| 4 | 0.5 | good | 3.10 | 54 |
| 5 | 1.0 | good | 3.12 | 58 |
| 6 | 3 | good | 3.11 | 57 |
| 7 | 5 | good | 3.10 | 55 |
| 8 | 10 | good | 3.08 | 55 |
| 9 | 30 | good | 3.04 | 49 |
| 10 | 50 | residual carbon present | 2.97 | 38 |

**Claim**

A process for producing a silicon carbide sintered product comprising the steps of:
a) forming a slurry of mixed powder particles of silicon carbide, carbon and resin binder;
b) drying and pulverizing said slurry to obtain secondary particles;
c) admixing less than 50 parts by weight of an organic silicon polymer whose skeleton is composed of silicon and carbon in form of a solution with 100 parts by weight of the secondary particles;
d) drying and pulverizing the thus obtained mixture to obtain a powder;
e) moulding a compact from said powder;
f) immersing said compact in a bath of molten silicon.

**Patentanspruch**

Verfahren zur Herstellung eines gesinterten Siliciumcarbidproduktes, umfassend die Stufen:
a) Bildung einer Aufschlämmung aus gemischten Pulverteilchen aus Siliciumcarbid, Kohlenstoff und Harzbindemittel,
b) Trocknen und Pulverisieren der Aufschlämmung zur Gewinnung von Sekundärteilchen,
c) Vermischen von weniger als 50 Gewichtsteile eines organischen Siliciumpolymeren, dessen Gerüst sich aus Silicium und Kohlenstoff zusammensetzt, in Form einer Lösung, mit 100 Gewichtsteilen der Sekundärteilchen,
d) Trocknen und Pulverisieren der auf diese Weise erhaltenen Mischung zur Gewinnung eines Pulvers,
e) Ausformung eines kompakten Teiles aus dem Pulver, und
f) Eintauchen des kompakten Teiles in ein Bad aus geschmolzenem Silizium.

4

# EP 0 157 879 B1

**Revendication**

Procédé de fabrication d'un corps fritté en carbure de silicium comportant les étapes consistant à:

a) former une bouillie de particules de poudre mélangées de carbure de silicium, de carbone et de liant à base de résine;

b) sécher et pulvériser ladite bouillie pour obtenir des particules secondaires;

c) ajouter moins de 50 parties en poids d'un polymère de silicium organique dont le squelette est constitué de silicium et de carbone sous la forme d'une solution avec 100 parties en poids des particules secondaires;

d) sécher et pulvériser le mélange ainsi obtenu pour obtenir une poudre;

e) mouler un aggloméré à partir de ladite poudre;

f) plonger ledit aggloméré dans un bain de silicium fondu.